# EUROPEAN PATENT SPECIFICATION

(11) **EP 1 700 967 B1**
(45) Date of publication and mention of the grant of the patent: **05.08.2009**
(21) Application number: 06075426.4
(22) Date of filing: 24.02.2006
(51) Int. Cl.: E04B 9/18, F16L 3/24

(54) **Suspension element**
Aufhängungselement
Elément de suspension

(30) Priority: 08.03.2005 NL 1028490
(43) Date of publication of application: 13.09.2006
(73) Proprietor: J. van Walraven Holding B.V., 3641 RK Mijdrecht (NL)
(72) Inventor: Van Walraven, Jan, 3641 GP Mijdrecht (NL)
(74) Representative: Houben, Christiaan Hein Willem Frans

(56) References cited:
- EP-A- 1 281 877
- EP-A1- 0 678 635
- DE-U1- 9 200 441
- DE-U1- 29 718 042
- FR-A- 2 631 398
- GB-A- 746 855
- US-A- 2 835 464
- US-A- 3 185 418
- US-A- 4 911 594
- US-A- 5 924 655
- US-B1- 6 508 442

## Description

The invention relates to a suspension element for suspending pipes, suspended ceilings or other construction elements from a roof. In many cases, roofs of structures are covered with corrugated roof panels, having for example an essentially curved or an essentially trapezoidal corrugation. It is customary to suspend said construction elements from the corrugated roof.

More particularly, the invention relates to a suspension element according to the preamble of claim 1.

A hole is made in both sides of a corrugation in the corrugated roof panel in order to attach a suspension element of this type to the roof, in such a manner that the holes are substantially in line with one another. The bracket is positioned so that the legs are on the sides of the corrugation. Subsequently, the supporting arm is pushed through the holes in the roof panel, following which the bracket is connected to the supporting arm such that the latter hangs from the roof panel. Construction elements, such as pipes, ceilings and the like can then be hung from the connecting piece of the bracket.

EP 678 635 shows a suspension element according to the preamble of claim 1.

. The bracket of this known suspension element has to be bent open in order to be able to place the legs of the bracket along the sides of the corrugation and to insert the supporting arm into the holes in the sides of a corrugation in the corrugated panel. Once the supporting arm has been inserted into the holes in the roof panel, the bracket has to be reshaped in order to insert the supporting arm into the first opening in the respective leg.

It is an object of the invention to provide an improved suspension element

This object is achieved by a suspension element according to claim 1.

With the suspension element according to the invention, the supporting arm is pushed so far outwards relative to the second leg that sufficient space is created between the legs of the bracket to place the legs from below upwards along the sides of the corrugation of the corrugated panel or another construction element. Subsequently, the supporting arm can be pushed inwards relative to the second leg, the supporting arm being inserted into the holes in the corrugated panel and through the first opening in the first leg until the hook means can grip behind the edge of the first opening. An object, such as a pipe bracket or a ceiling part can then be hung from the connecting piece.

The supporting arm is provided with a stop means on a part which, in the mounted state, is on the outside of the second leg, which stop means does not fit through the second opening, thus making it impossible for the end of the supporting arm to be passed through the second opening. The first stop means in this case ensures that the respective end of the supporting arm does not fit through the second opening. Pushing the supporting arm completely through the second opening from the outside, which would result in the supporting arm becoming uncoupled from the second leg, is thus inhibited.

In a further preferred embodiment, the supporting arm is provided with a second stop means at a distance from the first stop means, which second stop means does not fit through the second opening, so that the other end of the supporting arm cannot be passed through the second opening. Pushing the supporting arm completely through the second opening from the inside of the second leg, as a result of which the supporting arm would become uncoupled from the second leg, is thus made impossible. During production of the suspension element according to this preferred embodiment, the supporting arm is initially partially inserted into the second opening following which the second stop means is fitted. The supporting arm is displaceably connected to the bracket and, as a result of the two stop means, cannot become detached, for example during transportation to the construction site or during the fitting of the suspension element to the roof. Preferably, the supporting arm is supplied by the supplier prefitted to the bracket in this manner, so that the supporting arm cannot become lost. An a preferred embodiment, the supporting arm is at a distance from the stop means provided with a retaining element which does not fit through the second opening, as a result of which the supporting arm cannot be passed through the second opening in its entirety and become detached from the bracket. As a result thereof, the fitter is able to hold the bracket with the supporting arm simply with one hand, which is advantageous, for example, if one considers that the fitter usually has to climb a ladder or a similar structure in order to fit the bracket. Thus, he does not have to worry about the supporting arm becoming detached from the bracket and falling down during installation.

The invention will be described below in more detail with reference to the drawing, in which:
Fig. 1 shows a perspective view of a preferred embodiment of a suspension element according to the first aspect of the invention,
Fig. 2 shows a top view of the suspension element from Fig. 1,
Fig. 3 shows a front view of the suspension element from Fig. 1,
Fig. 4 shows a side view of the suspension element from Fig. 1,
Fig. 5 shows a supporting arm of the suspension element from Fig. 1 in a folded-out position.
   The suspension element of Fig. 6-8 does not form part of the invention, because the supporting arm has no hook means as defined in claim 1.
Fig. 6 shows a perspective view of a preferred embodiment of a suspension element according to the second aspect of the invention,
Fig. 7 shows a side view of the suspension element from Fig. 6, and
Fig. 8 shows a top view of a spring nut used in the suspension element from Fig. 6.

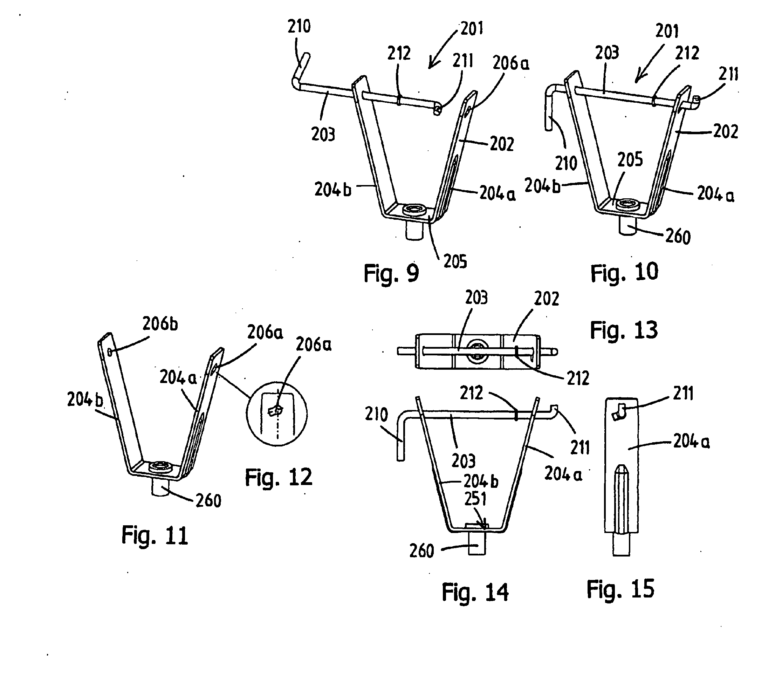

Fig. 9-15 show another embodiment according to the invention.

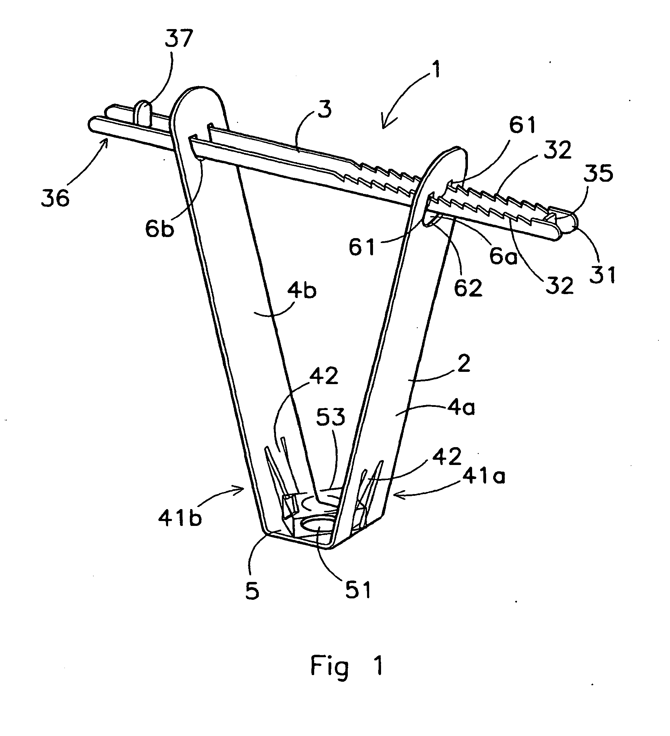

Fig. 1 shows a suspension element 1 according to the first aspect of the invention. The suspension element 1 comprises a bracket 2 and a supporting arm 3. The bracket 2 comprises a first leg 4a and a second leg 4b, which legs 4a, 4b are connected to one another at a bottom side by a connecting piece 5. In this case, the legs 4a, 4b extend from the connecting piece 5 in a spread position. Preferably, in the unloaded state, the legs 4a, 4b are at an angle of approximately 15° relative to the normal on the plane of the connecting piece 5. However, the bracket 2 can be deformed to such a degree that the legs 4a, 4b can also be bent at a different angle.

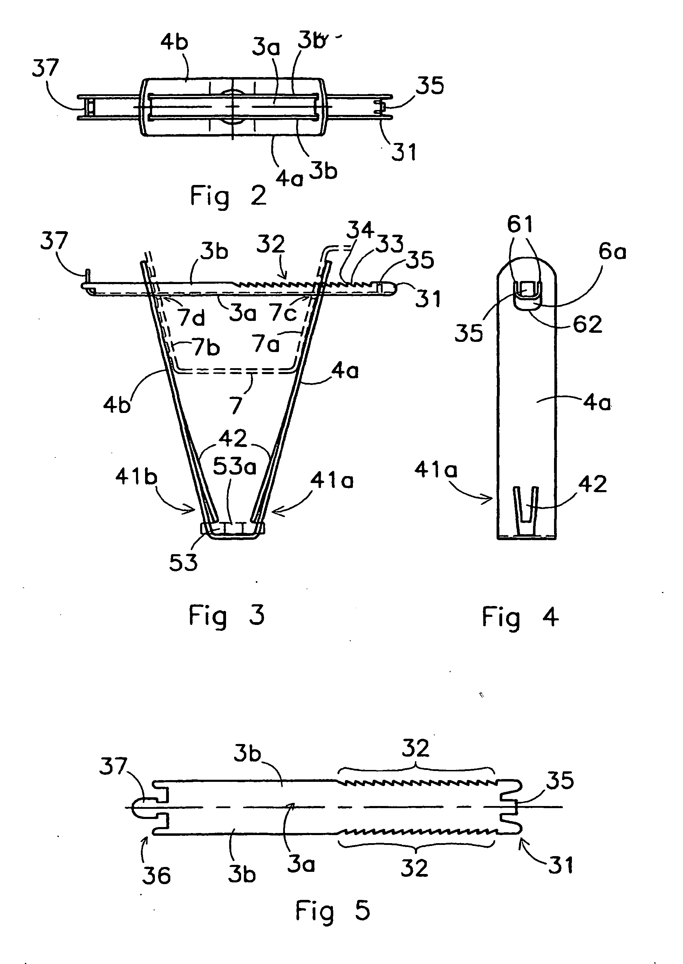

An opening 6a is provided near the top end of the first leg 4a. A second opening 6b is provided near the top end of the second leg 4b. In the fitted state, as shown in Figs. 1-4, the supporting arm 3 extends through the openings 6a and 6b. In Fig. 3, a corrugation 7 of a corrugated roof panel is shown by means of a dotted line. The suspension element is suspended from the corrugated panel by positioning the legs 4a, 4b along the sides 7a, 7b of the corrugation (see Fig. 3), so that the openings 6a, 6b in the legs 4a, 4b are arranged in line with holes 7c, 7d provided in the sides 7a, 7b of the corrugation 7. In this case, the legs 4a, 4b can thus be spread to a greater or lesser degree, as mentioned above. In this manner, the suspension element is suspended from the corrugation 7 of a roof panel.

As can be seen in the example of Figs. 1-5, the supporting arm 3 is formed as a duct-shaped profiled section having a bottom 3a and upright side walls 3b. The upper side of the duct-shaped profiled section is open. In the embodiment shown, the duct-shaped profiled section is substantially U-shaped in cross section. The second opening 6b in the second leg 4b has a shape which substantially complements the cross section of the supporting arm 3, i.e. in this case is substantially U-shaped. The supporting arm 3 can be displaced through the opening 6b relative to the leg 4b.

In the exemplary embodiment shown, the first opening 6a in the first leg 4a has a substantially rectangular shape of a width and a height which are preferably slightly larger than the width and height of the supporting arm 3, two groove-like recesses 61 being provided in the corners at the top of the rectangle. In the position where they are fitted to the roof, the side walls 3b of the supporting arm 3 can extend through these recesses 61. It should be noted that, within the context of the inventive idea, the supporting arm may also have a cross section different from the one shown here. Of course, the supporting arm does not have to be in the shape of an open profiled section as in Figs. 1-5 and may, for example, also be solid. The cross section may be of any desired shape, for example rectangular, trapezoidal or circular. It is clear that the opening in the first leg 4a may, depending on the cross-sectional shape of the supporting arm 3, thus also be of a different shape, as long as the supporting arm 3 fits through the opening and can grip behind the edge of the opening using a suitable hook means.

In the area ranging approximately from the middle of the supporting arm 3 up to the end 31 which is pushed through the opening 6a during fitting, a toothed area 32 is provided at the top edge of the side walls 3b. The toothed areas 32 serve as hook means in order to grip behind the top edge of the groove-like recesses 61 of the opening 6a. When the supporting arm 3 is displaced to the right in the Figs. 1-3, the top edges of the groove-like recesses 61 will slide over the obliquely upwardly directed guide surfaces 33 of the teeth of the toothing 32. If the supporting arm 3 in the Figs. 1-3 is subsequently moved to the left, these top edges of the recess 61 will hook behind hook surfaces 34 of the teeth which are provided substantially at right angles to the longitudinal direction, so that the supporting arm 3 cannot be uncoupled from the first leg 4a of the bracket 2 in this fitted position suspended from the roof panel.

The height of the opening 6a is such that, if this is desirable, the bracket 2 can be moved slightly upwards relative to the supporting arm 3, so that the bottom 3a of the supporting arm 3 approximately touches the bottom edge 62 of the opening 6a. In this position, the hook surfaces 34 of the teeth of the toothing 32 no longer grip behind the top edge of the groove-like recess 61 associated with the opening 6a and the supporting arm 3 in the Figs. 1-3 can be moved to the left and thus it is possible to uncouple the supporting arm 3 from the first leg 4a of the bracket 2 in order thus to be able to detach the entire suspension element 1 from the roof structure. Conversely, the head end face 35 can be inserted into the opening 6a in the first leg 4a when the bottom 3a of the supporting arm 3 is located approximately against the bottom edge 62 of the opening 6a.

Near one end 36 of the supporting arm 3, a first stop means in the form of an upright head end face 37 is provided. The head end face 37 extends from the bottom 3a upwards and protrudes beyond the top edge of the side walls 3b of the profiled section. Near its other end 31, the supporting arm 3 is provided with a second stop means in the form of a head end face 35. The head end face 35 is integrally formed with the supporting arm and extends from the bottom 3a of the profiled section upwards and is approximately the same height as the upright side walls 3b of the profiled section.

Fig. 5 shows the supporting arm 3 in a folded-out position. Preferably, the supporting arm 3 is made from a steel strip having a thickness of preferably one to a few millimetres, the diameter being cut out, as can be seen in Fig. 5, by means of a suitable cutting method. The final shape as illustrated in Figs. 1, 2 and 3, is obtained by bending the walls 3b as well as the head end faces 35 and 37 upwards. The head end faces 35 and 37 ensure that the supporting arm 3 cannot be completely pushed through the opening 6b in the second leg 4b as a result of the fact that the opening 6b is approximately complementary to the cross section of the supporting arm 3. In the embodiment shown in Fig. 1, the second stop means 35 therefore does not act as a retaining element.

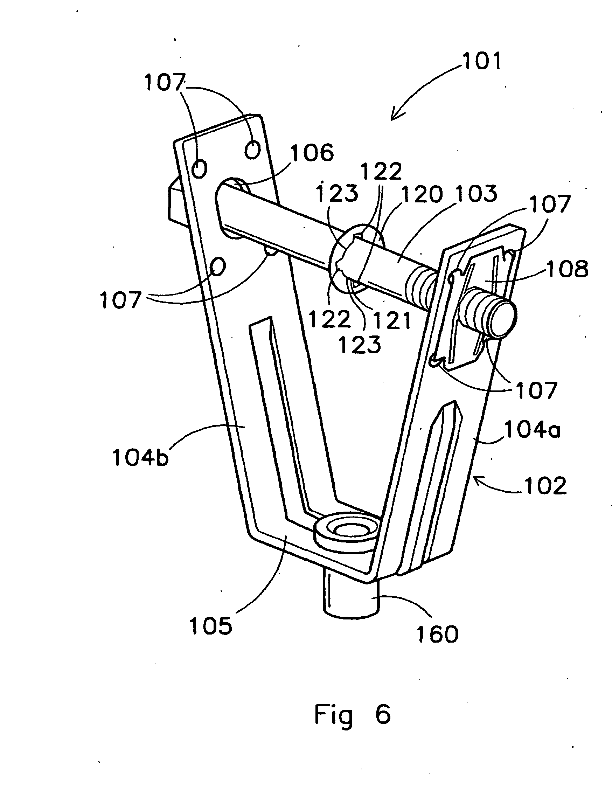

The connecting piece 5 of the bracket 2 is provided with a hole 51 for passing through a rod-shaped element to be suspended from the bracket 2, such as for example a threaded end (not shown). There are several ways of attaching the threaded end to the bracket 2, for example by means of a nut 53, as shown in Fig. 1, or by means of a sleeve 160, as shown in Fig. 6.

The example of Fig. 1 shows that resilient lips 42, which project inwardly relative to the inside of the legs 4a, 4b, are formed in the lowermost area 41a and 41b, near the connecting piece 5. A nut body 53, indicated in Fig. 3 by means of a dotted line, can be placed on the top of the connecting piece 5. The bottom ends of the resilient lips 42 engage on the top of the nut body 53 (see Fig. 3). A threaded end or something similar can be screwed into the bore 53a of the nut body 52, at the other end of which threaded end a pipe bracket or another construction element can be fitted, for example.

The bracket 2 is preferably made in one piece from a strip of steel or spring steel having a thickness of, for example, one to a few millimetres. The openings 51, 6a and 6b and the resilient lips 42 can be formed by punching, and in the latter case, by bending.

An other suspension element, not forming part of the invention, is shown in Figs. 6-8. Fig. 6 shows a perspective view of a suspension element 101 comprising a bracket 102 having a first leg 104a and a second leg 104b. The legs 104a and 104b are connected at a bottom side by a connecting piece 105. Preferably, the bracket is made from one piece of metal strip, preferably steel with a thickness of one to a few millimetres. Near the top end of the legs 104a, 104b, in each case one opening 106 is provided.

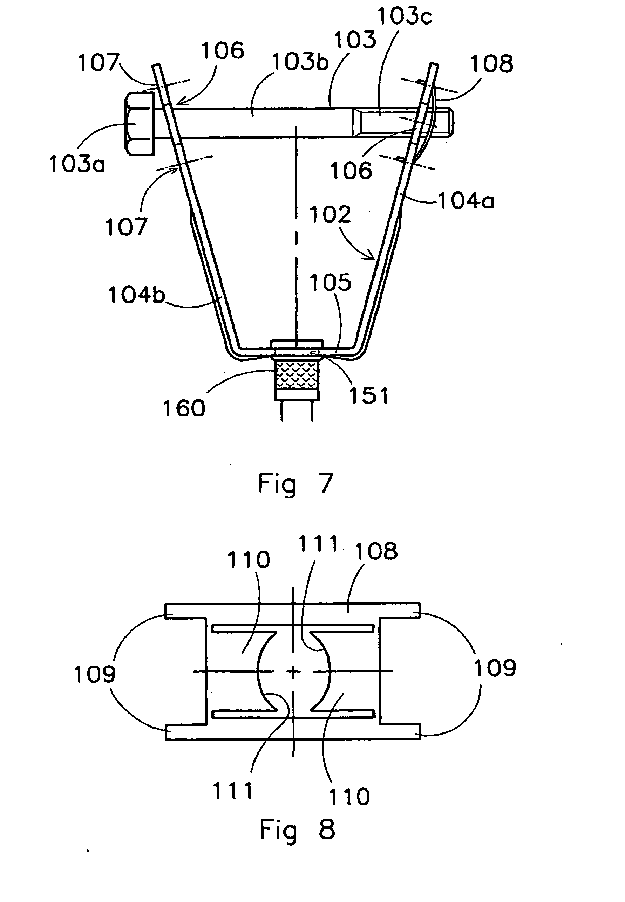

With this suspension element 101, a bolt 103 is used as supporting element. The bolt 103 has a bolt head 103a which serves as stop element and a bolt shank 103b. A portion of the bolt shank 103b is provided with a threaded section 103c. In order to fit the suspension element 101, the legs 104a, 104b of the bracket 102 are placed along the sides of a corrugated roof panel and the bolt 103 is inserted into the openings 106 and the holes in the roof panel as has already been described above with respect to the other suspension element 1 according to the first aspect of the invention with reference to Fig. 3. In the fitted position, the bracket 102 is thus suspended from the bolt 103. In the fitted position, the head 103a of the bolt 103 lies on the outside of the second leg 104b, as can be seen in Fig. 6 and Fig. 7.

A spring nut 108, preferably made of spring steel, is provided on the outside of the leg 104a as female fastening element in the embodiment shown in Fig. 6. In order to fasten the specific spring nut 108 shown to the leg 104a, in this case four round bores 107 are provided around the openings 106 in the legs 104a, 104b. The spring nut 108 is produced by cutting the shape shown in Fig. 8 from a strip of spring steel. The cut shape is substantially rectangular, with four fastening lips 109 extending near the corners which, in the fitted state, are inserted in the holes 107 in the first leg 104a of the bracket 102 and subsequently bent in order to secure the spring nut 108 relative to the first leg 104a.

The spring nut 108 shown has two resilient lips 110, each having an end face 111 in the shape of a circular arch. The end faces 111 of the lips 110 form a passage opening for the threaded section 103c of the bolt 103. As the nut body will bulge outwards slightly when the bolt shank 103b is pushed through from the inside of the first leg 104a, as can be seen in Figs. 6 and 7, the resilient lips 110 will move outwards and grate over the screw thread 103c of the bolt 103. The convex shape of the spring nut 108 ensures that the bolt 103 cannot, however, be pulled out of the nut body, i.e. that the bolt 103 in the Figs. 6 and 7 cannot be moved to the left by the meshing of the end faces 111 of the resilient lips 110. The spring nut 108 is made from spring steel which is so thin that the end faces 111 engage on the screw thread of the bolt 103. The bolt 103 can thus only be detached from the nut body 108 by turning the latter, the end faces 111 acting as counter element for the screw thread 103c of the bolt 103.

It will be clear that it is also possible to use a differently designed spring nut which is attached to the bracket 102 in a manner different to that using the fastening lips 109 (see Fig. 6).

In an alternative suspension element, also not forming part of the invention, (not shown), an internally threaded nut body is displaceably arranged on the first leg as female fastening element. Preferably, this is achieved by providing a casing on the first leg in which the nut body is accommodated in such a manner that the nut cannot be turned, but can be displaced and tilted in the axial direction. The fact that the leg is installed at a variable angle relative to the horizontal can be compensated for by adjusting the position of the nut relative to the leg. The nut is locked so that the nut cannot become detached from the bracket.

In a suspension element, also not forming part of the invention, a retaining element 120 is provided on the bolt. This retaining element 120 may be a separate retaining ring, such as is illustrated in Fig. 6 and engages on the bolt shank 103b with such force that the bolt 103 is prevented from becoming detached from the bracket 102 during transport or installation. However, the said force is also chosen such that the resistance which the bolt shank 103b of the retaining ring 120 is subjected to during installation is so small that, if required, the bolt shank 103b can be displaced relative to the retaining ring 120 relatively easily. The latter may be necessary in order to displace the bolt so far relative to the second leg of the bracket that sufficient space is created around the bracket to fit the corrugation of a roof panel or of another construction element.

The retaining ring is preferably made of plastic, but could, for example, also be made of metal. As can be seen in the specific example in Fig. 6, the retaining ring 120 has a central opening 121 through which the bolt shank 103b is passed. In the illustrated example, four slots 122 extend radially outwards from the central opening 121, so that engagement lips 123 are created between the slots. As a result of the flexibility of the material of the ring 120 and therefore of the engagement lips 123, an engagement force, as mentioned above, is generated when the engagement lips 123 are deformed as a result of a bolt shank 103b being passed through.

Compared to a known suspension element having a separate threaded rod or bolt with separate nuts, the suspension elements according to fig. 6-8 have the advantage that the female fastening elements cannot become lost during transport or installation and the installation itself is also simpler. Compared to an embodiment having a threaded rod with two nuts, another advantage is the fact that no threaded rod has to be sawn to size which would have resulted in unprotected non-galvanized end faces and which would also have cost more time.

In the connecting piece 105 of the bracket 102, an opening 151 is provided in which a sleeve 160 can be arranged which is provided on the inside with a screw thread. A threaded end or the like can be screwed into said sleeve 160, onto which a pipe bracket or another construction element can be fastened. It will be clear that with this bracket 102, it is also possible to use a nut body rather than the sleeve 160 to fasten a threaded end, which nut body is then for example mounted on the bracket 102 in the manner shown in Fig. 1 and described above. To this end, the bracket 102 could be provided with inwardly projecting lips, such as those denoted in Fig. 1 by reference numeral 42.

Obviously, other embodiments are also conceivable in addition to the exemplary embodiments illustrated above, in which, on the connecting piece, a threaded end is connected to a separate nut, a nut welded to the connecting piece, a riveted nut.

## Claims

1. Suspension element (1, 201) comprising a bracket (2, 202) having a first leg (4a, 204a) and a second leg (4b, 204b) which are connected to one another at a bottom end by connecting piece (5, 205), which connecting piece (5, 205) is provided with a facility (51, 53, 251, 260) for forming a coupling with a rod-shaped element to be suspended from the bracket, and the suspension element (1, 201) furthermore comprising a supporting arm (3, 203) which, in the mounted state, is coupled to a top end of the first leg (4a, 204a) and a top end of the second leg (4b, 204b) and extends between these so that both legs (4a, 4b, 204a, 204b) are supported by the supporting arm (3, 203) when the supporting arm (3, 203) is pushed through a fixed construction part (7) in order to be suspended from it, the first leg (4a, 204a) being provided with a first opening (6a, 206a) which extends from an inner side to an outer side of the first leg (4a, 204a) in order to insert a part of the supporting arm (3, 203) from the inside and the supporting arm (3, 203) having a hook means (32, 211) for gripping behind the edge of the first opening (6a, 206a) on the outside of the respective leg (4a, 204a) when this is inserted into the latter, **characterized in that** the supporting arm (3, 203) in the mounted state extends through a second opening (6b, 206b) which extends in the top end of the second leg (4b, 204b) from an inner side to an outer side of that leg (4b, 204b), the supporting arm (3, 203) being arranged so as to be displaceable with respect to the second leg (4b, 204b), wherein the supporting arm (3, 203) is provided with a first stop means (37, 210) on a part which, in the mounted state, is on the outside of the second leg (4b, 204b), which first stop means (37, 210) does not fit through the second opening (6b, 206b) when the supporting arm (3, 23) is in the mounted state, thus making it impossible for the end of the supporting arm (3, 203) to be passed through the second opening (6b, 206b).

2. Suspension element according to claim 1, in which the supporting arm is provided with a second stop means (35) at a distance from the first stop means (37), which second stop means/does not fit though the second opening, (6b) so that the other end of the supporting arm (3) cannot be passed through the second opening (6b).

3. Suspension element according to one of the preceding claims, in which the supporting arm (3) is formed as a duct-shaped profiled section having a bottom (3a), upright side walls (3b) and an open top.

4. Suspension element according to claim 3, in which the shape and dimensions of the second opening (6b, 206b) are substantially equal to the cross section of the supporting arm (3, 203).

5. Suspension element according to claim 3 or 4 to the extent that it depends on claim 2, in which the first stop means (37) comprises a bent bottom or wall part provided at the head end (36).

6. Suspension element according to one of the claims 3-5, in which the first stop means (37) comprises a first head end face provided at the end (36) of the supporting arm (3) and rising from the bottom (3a).

7. Suspension element according to claim 6, in which the upright head end face (37) protrudes beyond the top edges of the side walls (3b) of the U-shaped profiled section.

8. Suspension element according to one of the claims 3-7 to the extent that it depends on claim 2, in which the second stop means (35) comprises a bent bottom or wall part provided near the supporting arm end (31).

9. Suspension element according to claim 8, in which the second stop means comprises a second head end face (35) provided at an end (31) of the supporting arm (3) and rising from the bottom (3a).

10. Suspension element according to one of the claims 1-9, in which the hook means comprise an area (32) of the supporting arm (3) which is provided with toothing in order to grip behind the edge of the first opening (6a).

11. Suspension element according to claim 10, in which the toothing (32) is provided at a top of the supporting arm (3) in order to grip behind a top part of the edge of the first opening (6a).

12. Suspension element according to claim 10 or 11, in which the toothed area (32) extends from approximately the axial centre to the end (31) of the supporting arm (32) which is to be inserted in the first opening (6a).

13. Suspension element according to one of the claims 1-12, in which the height of the first opening (6a) is substantially at least equal to the height of the cross section of the supporting arm (3).

14. Suspension element according to claim 13, in which the first opening (6a) has two slot-like recesses (61) extending upwards in the corners.

15. Suspension element according to one of the preceding claims, in which the legs (4a, 4b, 204a, 204b) spread from the connecting piece (5, 205).

16. Suspension element according to one of the preceding claims, in which inwardly projecting resilient lips (42) are provided in the region of the legs (4a, 4b) near the connecting piece (6) in order to engage on a top (53a) of a nut body (53) which can be fitted to the connecting piece (5) so that the hole in the nut body (53) is in line with a hole (51) in the connecting piece (5).

17. Suspension element according to one of the preceding claims, in which the bracket (2, 202) is made from steel or spring steel.

18. Suspension element according to one of the preceding claims, in which the supporting arm (3, 203) is made from steel.

19. Suspension element according to claim 18 to the extent that it depends on claim 3, in which the supporting element (3) is a bent profiled section, preferably made from steel.

20. Suspension element according to anyone of the preceding claims in which, at a distance from the first stop means, the supporting arm (203) is provided with a retaining element (212) such that the retaining element in the mounted state situated between the two legs of the bracket, which retaining element does not fit through the second opening, as a result of which the supporting arm (203) cannot be passed through the second opening (206b) in its entirety and become detached from the bracket (202).

## Patentansprüche

1. Aufhängungselement (1, 201), das einen Träger (2, 202) mit einem ersten Schenkel (4a, 204a) und einem zweiten Schenkel (4b, 204b) umfasst, die an einem unteren Ende durch ein Verbindungsteil (5, 205) miteinander verbunden sind, wobei das Verbindungsteil (5, 205) mit einer Einrichtung (51, 53, 251, 260) versehen ist, um eine Kopplung mit einem an dem Träger aufzuhängenden stabförmigen Element zu bilden, wobei das Aufhängungselement (1, 201) ferner einen Tragarm (3, 203) umfasst, der im montierten Zustand mit einem oberen Ende des ersten Schenkels (4a, 204a) und mit einem oberen Ende des zweiten Schenkels (4b, 204b) gekoppelt ist und sich zwischen ihnen erstreckt, so dass beide Schenkel (4a, 4b, 204a, 204b) durch den Tragarm (3, 203) getragen werden, wenn der Tragarm (3, 203) durch einen festen Konstruktionsabschnitt (7) geschoben ist, um daran aufgehängt zu sein, wobei der erste Schenkel (4a, 204a) mit einer ersten Öffnung (6a, 206a) versehen ist, die sich von einer Innenseite zu einer Außenseite des ersten Schenkels (4a, 204a) erstreckt, um einen Teil des Tragarms (3, 203) von innen einzuführen, und der Tragarm (3, 203) ein Einhakmittel (32, 211) besitzt, das hinter der Kante der ersten Öffnung (6a, 206a) an der Außenseite des entsprechenden Schenkels (4a, 204a) in Eingriff ist, wenn dieser in die Öffnung eingeführt ist, **dadurch gekennzeichnet, dass** sich der Tragarm (3, 203) im montierten Zustand durch eine im oberen Ende des zweiten Schenkels (4b, 204b) verlaufende zweite Öffnung (6b, 206b) von einer Innenseite zu einer Außenseite des Schenkels (4b, 204b) erstreckt, wobei der Tragarm (3, 203) dazu ausgelegt ist, in Bezug auf den zweiten Schenkel (4b, 204b) verlagerbar zu sein, wobei der Tragarm (3, 203) mit einem ersten Anschlagmittel (37, 210) an einem Abschnitt versehen ist, der sich im montierten Zustand an der Außenseite des zweiten Schenkels (4b, 204b) erstreckt, wobei das erste Anschlagmittel (37, 210) nicht durch die zweite Öffnung (6b, 206b) passt, wenn der Tragarm (3, 23) im montierten Zustand ist, so dass es unmöglich ist, das Ende des Tragarms (3, 203) durch die zweite Öffnung (6b, 206b) zu bewegen.

2. Aufhängungselement nach Anspruch 1, wobei der Tragarm mit einem zweiten Anschlagmittel (35) in einem Abstand von dem ersten Anschlagmittel (37) versehen ist, wobei das zweite Anschlagmittel (35) nicht durch die zweite Öffnung (6b) passt, so dass das andere Ende des Tragarms (3) nicht durch die zweite Öffnung (66) bewegt werden kann.

3. Aufhängungselement nach einem der vorhergehenden Ansprüche, wobei der Tragarm (3) als ein rohrförmiger Profilabschnitt mit einem Boden (3a), aufrechten Seitenwänden (3b) und einer offenen Oberseite ausgebildet ist.

4. Aufhängungselement nach Anspruch 3, wobei die Form und die Abmessungen der zweiten Öffnung (6b, 206b) im Wesentlichen gleich dem Querschnitt des Aufhängungsarms (3, 203) sind.

5. Aufhängungselement nach Anspruch 3 oder 4, sofern abhängig von Anspruch 2, wobei das erste Anschlagmittel (37) einen gebogenen Boden-oder Wandabschnitt aufweist, der am Kopfende (36) vorgesehen ist.

6. Aufhängungselement nach einem der Ansprüche 3-5, wobei das erste Anschlagmittel (37) eine erste Kopfstirnfläche umfasst, die am Ende (36) des Tragarms (3) vorgesehen ist und sich vom Boden (3a) erhebt.

7. Aufhängungselement nach Anspruch 6, wobei sich die aufrechte Kopfstirnfläche (37) über die Oberkanten der Seitenwände (36) des U-förmigen Profilabschnitts hinaus erstreckt.

8. Aufhängungselement nach einem der Ansprüche 3-7, wenn abhängig von Anspruch 2, wobei das zweite Anschlagmittel (35) einen gebogenen Boden-oder Wandabschnitt umfasst, der in der Nähe des Tragarmendes (31) vorgesehen ist.

9. Aufhängungselement nach Anspruch 8, wobei das zweite Anschlagmittel eine zweite Kopfstirnfläche (35) umfasst, die an einem Ende (31) des Tragarms (3) vorgesehen ist und sich von dem Boden (3a) erhebt.

10. Aufhängungselement nach einem der Ansprüche 1-9, wobei das Einhakmittel einen Bereich (32) des Tragarms (3) umfasst, der mit einer Zahnung versehen ist, um hinter der Kante der ersten Öffnung (6a) in Eingriff zu gelangen.

11. Aufhängungselement nach Anspruch 10, wobei die Zahnung (32) an einer Oberseite des Tragarms (3) vorgesehen ist, um hinter einem oberen Teil der Kante der ersten Öffnung (6a) in Eingriff zu gelangen.

12. Aufhängungselement nach Anspruch 10 oder 11, wobei sich der gezahnte Bereich (32) ungefähr vom axialen Zentrum zum Ende (31) des Tragarms (3) erstreckt, das in die erste Öffnung (6a) eingeführt werden soll.

13. Aufhängungselement nach einem der Ansprüche 1-12, wobei die Höhe der ersten Öffnung (6a) im Wesentlichen wenigstens gleich der Höhe des Querschnitts des Tragarms (3) ist.

14. Aufhängungselement nach Anspruch 13, wobei die erste Öffnung (6a) zwei schlitzartige Aussparungen (61) besitzt, die sich in den Ecken nach oben erstrecken.

15. Aufhängungselement nach einem der vorhergehenden Ansprüche, wobei sich die Schenkel (4a, 4b, 204a, 204b) von dem Verbindungsteil (5, 205) gespreizt erstrecken.

16. Aufhängungselement nach einem der vorhergehenden Ansprüche, wobei in dem Bereich der Schenkel (4a, 4b) in der Nähe des Verbindungsteils (5) nach innen vorstehende elastische Lippen (42) vorgesehen sind, um mit einer Oberseite (53a) eines Mutternkörpers (53) in Eingriff zu gelangen, der an dem Verbindungsteil (5) angebracht werden kann, so dass das Loch in dem Mutternkörper (53) auf ein Loch (51) in dem Verbindungsteil (5) ausgerichtet ist.

17. Aufhängungselement nach einem der vorhergehenden Ansprüche, wobei der Träger (2, 202) aus Stahl oder aus Federstahl hergestellt ist.

18. Aufhängungselement nach einem der vorhergehenden Ansprüche, wobei der Tragarm (3, 203) aus Stahl hergestellt ist.

19. Aufhängungselement nach Anspruch 18, wenn abhängig von Anspruch 3, wobei das Tragelement (3) ein gebogener Profilabschnitt ist, der vorzugsweise aus Stahl hergestellt ist.

20. Aufhängungselement nach einem der vorhergehenden Ansprüche, wobei in einem Abstand von dem ersten Anschlagmittel der Tragarm (203) mit einem Halteelement (212) versehen ist, derart, dass sich das Halteelement im montierten Zustand zwischen den zwei Schenkeln des Trägers befindet, wobei das Halteelement nicht durch die zweite Öffnung passt, weshalb der Tragarm (203) nicht vollständig durch die zweite Öffnung (206b) bewegt werden kann und daher nicht von dem Träger (202) abgenommen werden kann.

## Revendications

1. Elément de suspension (1, 201) comprenant un support (2, 202) comportant une première patte (4a, 204a) et une deuxième patte (4b, 204b) qui sont reliées l'une à l'autre à une extrémité inférieure par un élément de liaison (5, 205), lequel élément de liaison (5, 205) est pourvu d'un mécanisme (51, 53, 251, 260) pour former un accouplement avec un élément en forme de tige à suspendre au support, et l'élément de suspension (1, 201) comprend en outre un bras de support (3, 203) qui, dans l'état monté, est accouplé à une extrémité supérieure de la première patte (4a, 204a) et à une extrémité supérieure de la deuxième patte (4b, 204b) et s'étend entre celles-ci de sorte que les deux pattes (4a, 4b, 204a, 204b) sont supportées par le bras de support (3, 203) lorsque le bras de support (3, 203) est poussé à travers une partie de construction (7) fixe afin d'être suspendu à celle-ci, la première patte (4a, 204a) étant pourvue d'une première ouverture (6a, 206a) qui s'étend d'un côté intérieur jusqu'à un côté extérieur de la première patte (4a, 204a) afin d'insérer une partie du bras de support (3, 203) à partir de l'intérieur et le bras de support (3, 203) comportant des moyens formant crochet (32, 211) pour s'accrocher à l'arrière du bord de la première ouverture (6a, 206a) sur l'extérieur de la patte (4a, 204a) respective lorsque celui-ci est inséré dans cette dernière, **caractérisé en ce que** le bras de support (3, 203) dans l'état monté s'étend à travers une deuxième ouverture (6b, 206b) qui s'étend dans l'extrémité supérieure de la deuxième patte (4b, 204b) d'un côté intérieur jusqu'à un côté extérieur de cette patte (4b, 204b), le bras de support (3, 203) étant agencé de manière à pouvoir être déplacé par rapport à la deuxième patte (4b, 204b), dans lequel le bras de support (3, 203) est pourvu de premiers moyens d'arrêt (37, 210) sur une partie qui, dans l'état monté, est sur l'extérieur de la deuxième patte (4b, 204b), lesquels premiers moyens d'arrêt (37, 210) ne s'insèrent pas à travers la deuxième ouverture (6b, 206b) lorsque le bras de support (3, 23) est dans l'état monté, rendant ainsi impossible le passage de l'extrémité du bras de support (3, 203) à travers la deuxième ouverture (6b, 206b).

2. Elément de suspension selon la revendication 1, dans lequel le bras de support est pourvu de deuxièmes moyens d'arrêt (35) à distance des premiers moyens d'arrêt (37), lesquels deuxièmes moyens d'arrêt (35) ne s'insèrent pas à travers la deuxième ouverture (6b), de sorte que l'autre extrémité du bras de support (3) ne peut pas passer à travers la deuxième ouverture (6b).

3. Elément de suspension selon l'une des revendications précédentes, dans lequel le bras de support (3) est formé en tant que section profilée en forme de conduit comportant une partie inférieure (3a), des parois latérales (3b) verticales et une partie supérieure ouverte.

4. Elément de suspension selon la revendication 3, dans lequel la forme et les dimensions de la deuxième ouverture (6b, 206b) sont sensiblement égales à la section transversale du bras de support (3, 203).

5. Elément de suspension selon la revendication 3 ou 4 dans la mesure où elle dépend de la revendication 2, dans lequel les premiers moyens d'arrêt (37) comprennent une partie inférieure pliée ou partie de paroi prévue à l'extrémité de tête (36).

6. Elément de suspension selon l'une des revendications 3 à 5, dans lequel les premiers moyens d'arrêt (37) comprennent une première face d'extrémité de tête prévue à l'extrémité (36) du bras de support (3) et montant à partir de la partie inférieure (3a).

7. Elément de suspension selon la revendication 6, dans lequel la face d'extrémité de tête (37) verticale fait saillie au-delà des bords supérieurs des parois latérales (3b) de la section profilée en forme de U.

8. Elément de suspension selon l'une des revendications 3 à 7 dans la mesure où elle dépend de la revendication 2, dans lequel les deuxièmes moyens d'arrêt (35) comprennent une partie inférieure pliée ou partie de paroi prévue à proximité de l'extrémité de bras de support (31).

9. Elément de suspension selon la revendication 8, dans lequel les deuxièmes moyens d'arrêt comprennent une deuxième face d'extrémité de tête (35) prévue à une extrémité (31) du bras de support (3) et montant à partir de la partie inférieure (3a).

10. Elément de suspension selon l'une des revendications 1 à 9, dans lequel les moyens formant crochet comprennent une zone (32) du bras de support (3) qui est pourvue de dents afin de s'accrocher à l'arrière du bord de la première ouverture (6a).

11. Elément de suspension selon la revendication 10, dans lequel les dents (32) sont prévues dans une partie supérieure du bras de support (3) afin de s'accrocher à l'arrière d'une partie supérieure du bord de la première ouverture (6a).

12. Elément de suspension selon la revendication 10 ou 11, dans lequel la zone dentée (32) s'étend approximativement du centre axial jusqu'à l'extrémité (31) du bras de support (3) qui doit être insérée dans la première ouverture (6a).

13. Elément de suspension selon l'une des revendications 1 à 12, dans lequel la hauteur de la première ouverture (6a) est au moins sensiblement égale à la hauteur de la section transversale du bras de support (3).

14. Elément de suspension selon la revendication 13, dans lequel la première ouverture (6a) comporte deux évidements similaires à des fentes (61) s'étendant vers le haut dans les coins.

15. Elément de suspension selon l'une des revendications précédentes, dans lequel les pattes (4a, 4b, 204a, 204b) s'étendent de l'élément de liaison (5, 205).

16. Elément de suspension selon l'une des revendications précédentes, dans lequel des lèvres élastiques (42) faisant saillie vers l'intérieur sont prévues dans la région des pattes (4a, 4b) à proximité de l'élément de liaison (5) afin de venir en prise avec une partie supérieure (53a) d'un corps d'écrou (53) qui peut être monté sur l'élément de liaison (5) de sorte que le trou dans le corps d'écrou (53) soit aligné avec un trou (51) dans l'élément de liaison (5).

17. Elément de suspension selon l'une des revendications précédentes, dans lequel le support (2, 202) est réalisé en acier ou en acier à ressort.

18. Elément de suspension selon l'une des revendications précédentes, dans lequel le bras de support (3, 203) est réalisé en acier.

19. Elément de suspension selon la revendication 18 dans la mesure où elle dépend de la revendication 3, dans lequel l'élément de support (3) est une section profilée pliée, de préférence réalisée en acier.

20. Elément de suspension selon l'une quelconque des revendications précédentes, dans lequel, à distance des premiers moyens d'arrêt, le bras de support (203) est pourvu d'un élément de retenue (212), de sorte que l'élément de retenue dans l'état monté est situé entre les deux pattes du support, lequel élément de retenue ne s'insère pas à travers la deuxième ouverture, en conséquence de quoi le bras de support (203) ne peut pas passer à travers la deuxième ouverture (206b) dans son intégralité et est détaché du support (202).
